(19) Europäisches Patentamt
European Patent Office
Office européen des brevets

(11) EP 3 761 400 A1

(12) EUROPEAN PATENT APPLICATION
published in accordance with Art. 153(4) EPC

(43) Date of publication:
**06.01.2021 Bulletin 2021/01**

(21) Application number: **19758231.5**

(22) Date of filing: **22.02.2019**

(51) Int Cl.:
***H01M 2/16*** *(2006.01)*

(86) International application number:
**PCT/JP2019/006727**

(87) International publication number:
**WO 2019/163933 (29.08.2019 Gazette 2019/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2018 JP 2018032520**
**17.07.2018 JP 2018134374**

(71) Applicant: **Daicel Corporation**
**Osaka 530-0011 (JP)**

(72) Inventors:
- **YAMAMOTO, Akito**
  **Tokyo 108-8230 (JP)**
- **IWAYA, Masao**
  **Tokyo 108-8230 (JP)**

(74) Representative: **Grünecker Patent- und Rechtsanwälte**
**PartG mbB**
**Leopoldstraße 4**
**80802 München (DE)**

# (54) SECONDARY BATTERY SEPARATOR

(57) Provided is a secondary battery separator that is lightweight and excels in heat resistance. The secondary battery separator of the present invention includes a porous base layer (A), and a heat resistant layer (B) formed from a non-woven fabric containing a binder and microfibers having a melting point (or a decomposition temperature in case of the microfibers having no melting point) of 200°C or higher. The microfibers are preferably aramid fibers, and the binder is preferably at least one type selected from a polysaccharide derivative (1), a compound having a constituent unit represented by formula (2), and a compound having a constituent unit represented by Formula (3). In the formulas, R denotes a hydroxyl group, a carboxyl group, a phenyl group, an N-substituted or unsubstituted carbamoyl group, or a 2-oxo-1-pyrrolidinyl group, n is an integer of 2 or higher, and L denotes an ether bond or an (-NH-) group.

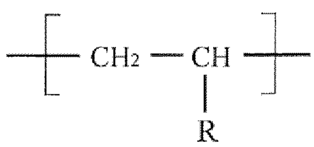

(2)

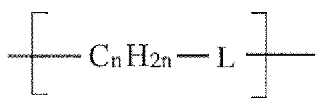

(3)

EP 3 761 400 A1

## Description

### Technical Field

The present invention relates to a secondary battery separator, a method for producing a secondary battery separator, and a secondary battery provided with the secondary battery separator. The present application claims the rights of priority of JP 2018-32520 filed in Japan on 26 February 2018, and of JP 2018-134374 filed in Japan on 17 July 2018, the contents of which are incorporated herein.

### Background Art

Separators that insulate a cathode and an anode while retaining an electrolytic solution are used in electricity storage devices such as lithium-ion secondary batteries. Therefore, the separator must ensure electrical insulation properties. In addition, a lithium-ion battery functions by the movement and passage of lithium ions through this separator, and therefore permeability also needs to be ensured.
Furthermore, a lithium-ion secondary battery must also have a "shutdown function" to safely stop the function of the battery by plugging the holes of the separator and stopping the flow of lithium ions between the electrodes when the inside of the battery reaches an abnormally high temperature. Also, in a case where the temperature inside the battery increases even after the flow of lithium ions has been stopped, when the separator contracts (shrinks) or melts (melts down), there is a concern that short circuiting of the electrodes or thermal runaway may occur. Therefore, the separator is required to have heat resistance to retain the shape even in an abnormally high temperature environment.
Lithium-ion secondary batteries are known for exhibiting high voltage and large capacity characteristics while maintaining a lightweight design, and thus in recent years, installing the lithium-ion secondary batteries in hybrid vehicles and electric vehicles, as well as in information related devices such as smartphones and notebook computers has been examined. Therefore, a demand has increased for a highly heat resistant separator in order to support even higher energy densities.
Patent Document 1 describes a ceramic separator produced by laminating, onto a surface of a laminate of a silicone sheet and a PET film, a composite material in which an inorganic filler is bound by a phenoxy resin, and indicates that the separator excels in heat resistance.
However, for example, in an electric vehicle, approximately 600 $m^2$ of separator is used per vehicle. The specific gravity of the separator containing the inorganic filler is large, and therefore the vehicle body weight increases, and this increase in weight prevents an increase in the cruising range.
Citation List

### Patent Document

Patent Document 1: WO 2012/005139

### Summary of Invention

### Technical Problem

Therefore, an object of the present invention is to provide a secondary battery separator that is lightweight and excels in heat resistance.
Another object of the present invention is to provide a method for producing a secondary battery separator that is lightweight and excels in heat resistance.
Another object of the present invention is to provide a secondary battery provided with the secondary battery separator that is lightweight and excels in heat resistance.

### Solution to Problem

As a result of diligent research to solve the problems described above, the present inventors discovered that a non-woven fabric containing a binder and microfibers having a high melting point (or high decomposition temperature) is both lightweight and heat resistant, that when a structure produced by laminating the non-woven fabric to the surface of a porous base layer (A) is used as a secondary battery separator, the shape of the structure can be maintained and short-circuiting of the electrodes can be prevented even in a high temperature environment, and that such a structure contributes to significant weight reduction of the battery. The present invention was completed based on these findings.
That is, the present invention provides a secondary battery separator including: a porous base layer (A); and

a heat resistant layer (B) made from a non-woven fabric containing a binder and microfibers having a melting point (or a decomposition temperature in case of the microfibers having no melting point) of 200°C or higher.

The present invention also provides the secondary battery separator, in which a 5% weight loss temperature of the microfibers is 200°C or higher.

The present invention also provides the secondary battery separator, in which the microfibers are aramid fibers.

The present invention also provides the secondary battery separator, in which the binder is a water-based binder.

The present invention also provides the secondary battery separator, in which the binder is at least one type selected from a polysaccharide derivative (1), a compound having a constituent unit represented by Formula (2) below, and a compound having a constituent unit represented by Formula (3) below.

[Chemical 1]

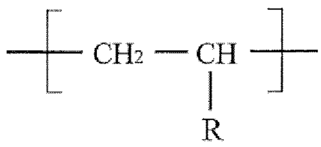

(2)

where R denotes a hydroxyl group, a carboxyl group, a phenyl group, an N-substituted or unsubstituted carbamoyl group, or a 2-oxo-1-pyrrolidinyl group.

[Chemical 2]

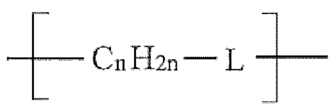

(3)

where n is an integer of 2 or higher, and L denotes an ether bond or an (-NH-) group.

The present invention also provides the secondary battery separator, in which the binder is at least one type selected from cellulose, starch, glycogen, and derivatives thereof.

The present invention also provides the secondary battery separator, in which an average thickness of the microfibers is from 0.01 to 10 μm, and an average length is from 0.01 to 1 mm.

The present invention also provides the secondary battery separator, in which a thickness of the heat resistant layer (B) is from 0.5 to 20 μm, and a total thickness of the secondary battery separator is from 10 to 50 μm.

The present invention also provides the secondary battery separator, in which a basis weight of the heat resistant layer (B) is 10 $g/m^2$ or less.

The present invention also provides a method for producing a secondary battery separator, the method including coating a surface of a porous base layer (A) with a solvent dispersion of microfibers and a binder, and volatilizing the solvent to produce the secondary battery separator.

The present invention also provides the method for producing the secondary battery separator, in which the method includes performing pressing after the solvent is volatilized.

The present invention also provides a secondary battery provided with the secondary battery separator.

Advantageous Effects of Invention

The secondary battery separator according to an embodiment of the present invention is lightweight, is provided with a function of retaining the shape even in a high temperature environment, and can suppress deformation caused by shrinkage, melting, and the like to a very small level. That is, the secondary battery separator excels in heat resistance. Thus, the secondary battery provided with the secondary battery separator according to an embodiment of the present invention maintains an insulating function through the separator even in a high temperature environment, and therefore short circuiting of the electrodes and the occurrence of thermal runaway caused by short circuiting of the electrodes can be prevented. In other words, the secondary battery excels in safety. Furthermore, it is possible to reduce the weight while maintaining excellent safety. Therefore, the secondary battery separator according to an embodiment of the present invention can be suitably used in information related devices such as smartphones and notebook computers, and in hybrid vehicles, electric vehicles, and the like.

For example, the weight of an electric vehicle that uses the secondary battery can be significantly reduced, and thereby fuel economy can be dramatically improved.

Description of Embodiments

[Secondary Battery Separator]

The secondary battery separator according to an embodiment of the present invention includes a porous base layer (A) and a heat resistant layer (B).

The secondary battery separator according to an embodiment of the present invention excels in heat resistance, and the shrinkage rate (for example, the MD shrinkage rate of the porous base material) at 150°C is 15% or less, preferably 10% or less, and particularly preferably 5% or less. Also, the shrinkage rate at 320°C (for example, shrinkage rate = [1 - (separator area after heating)/(separator area before heating) × 100]) is for example 25% or less, preferably 20% or less, and particularly preferably 15% or less. Thus, the shape of the separator can be maintained even in a high temperature environment, and short circuiting of the electrodes due to deformation of the separator can be prevented.

The air permeability of the secondary battery separator according to an embodiment of the present invention is, for example, from 100 to 800 sec/100 mL, preferably from 100 to 600 sec/100 mL, particularly preferably from 100 to 400 sec/100 mL, and most preferably from 100 to 350 sec/100 mL. Therefore, the rate of increase in air permeation resistance is extremely small, and permeability of the electrolytic solution is excellent.

Furthermore, the secondary battery separator according to an embodiment of the present invention is extremely lightweight because the heat resistant layer (B) is formed from a non-woven fabric. As a result, a secondary battery provided with the secondary battery separator according to an embodiment of the present invention can be reduced in weight, and the weight of an electric vehicle or the like that uses the secondary battery can be significantly reduced.

The secondary battery separator according to an embodiment of the present invention can exhibit sufficient heat resistance even when the heat resistant layer (B) is thin. As a result, the thickness of the secondary battery separator can be reduced, and the total thickness thereof is, for example, from 10 to 50 μm, and preferably from 15 to 30 μm. Thus, the secondary battery separator according to an embodiment of the present invention can increase the packing density of the battery, and contributes to a reduction in the size of the secondary battery.

(Porous Base Layer (A))

The porous base layer (A) has voids, and the size of the voids is, for example, from 0.01 to 1 μm, and preferably from 0.02 to 0.06 μm. In a case where the size of the voids exceeds the range described above, the insulating property will decline, and short circuiting tends to easily occur. On the other hand, in a case where the size of the voids falls below the range described above, electrical resistance tends to increase.

The porosity of the porous base layer (A) is, for example, preferably from 20 to 70 vol%, and particularly preferably from 30 to 60 vol%. In a case where the porosity exceeds the range described above, the strength tends to be insufficient. On the other hand, in a case where the porosity falls below the range described above, the permeability of the lithium ions is negatively affected, and electrical resistance tends to increase.

The air permeability of the porous base layer (A) is, for example, from 100 to 600 sec/100 mL, preferably from 100 to 400 sec/100 mL, and particularly preferably from 100 to 350 sec/100 mL. In a case where the air permeability exceeds the range described above, the permeability of the lithium ions is negatively affected, and electrical resistance tends to increase. On the other hand, in a case where the air permeability is below the range described above, the strength tends to be insufficient.

Preferably, the porous base layer (A) is insoluble in the electrolytic solution, and has a function of softening in a high temperature environment to thereby close the voids, that is, the porous base layer (A) is preferably provided with a shutdown function. Therefore, the material of the porous base layer (A) is preferably a thermoplastic polymer. Examples of thermoplastic polymer include polyolefins such as polyethylene and polypropylene; polyester resins such as polyethylene terephthalate; and aliphatic polyamides such as 2,6-nylon. Furthermore, from amongst these thermoplastic polymers, preferably, the thermoplastic polymer is appropriately selected and used according to the desired shutdown temperature. For example, in a case where the shutdown temperature is to be set to 150°C, a thermoplastic polymer having a melting point or softening temperature from 140 to 150°C is preferably used.

The thickness of the porous base layer (A) is, for example, from 10 to 40 μm, and preferably from 15 to 30 μm. In a case where the thickness exceeds the range described above, the electrical resistance of the battery increases, and the volume capacity tends to decrease. On the other hand, in a case where the thickness falls below the range described above, the strength tends to be insufficient.

The porous base layer (A) can be produced by, for example, a method of heating and melting a material of the porous base material (for example, polyolefin), extruding the melted material to form a film, and then stretching the formed coated film to create a porous base material.

The surface of the porous base layer (A) can be subjected to one or more treatments selected from a roughening treatment, adhesion-facilitating treatment, antistatic treatment, sandblasting treatment (sand mat treatment), corona

discharge treatment, plasma treatment, chemical etching treatment, water mat treatment, flame treatment, acid treatment, alkali treatment, ultraviolet irradiation treatment, and silane coupling agent treatment.

For example, the surface of the porous base layer (A) is subjected to a treatment selected from a corona discharge treatment, plasma treatment, flame treatment, acid treatment, alkali treatment, and ultraviolet irradiation treatment, and then subjected to a silane coupling agent treatment, and this achieves an effect of improving the adhesion between the porous base layer (A) and the heat resistant layer (B) compared to a case where the silane coupling agent treatment is performed alone.

In an embodiment of the present invention, from the perspective of achieving an effect of reducing air permeability, improving the permeability of lithium ions and reducing electrical resistance, it is particularly preferable to subject the porous base layer (A) to a treatment that imparts a polar group (for example, a hydroxyl group, a carbonyl group, or a carboxyl group) on the surface of the porous base layer (A), and thereby improves wettability, examples of such treatment including a corona discharge treatment or a plasma treatment.

Therefore, in the porous base layer (A), a porous base material that is made from a thermoplastic polymer and has a polar group imparted on the surface thereof is preferably used, and use of a polyolefin-based porous base material having a polar group imparted to the surface is particularly preferable.

(Heat Resistant Layer (B))

The heat resistant layer (B) is made from a non-woven fabric containing a binder and microfibers having a melting point (or a decomposition temperature in case of the microfibers having no melting point) of 200°C or higher.

The content of the binder is, for example, from 1 to 20 parts by weight per 10 parts by weight of the microfibers. Use of an excessive amount of the binder tends to obstruct the voids of the separator and increase the electrical resistance. Therefore, an upper limit of the binder content is preferably 16 parts by weight, particularly preferably 12 parts by weight, and most preferably 10 parts by weight. In addition, a lower limit of the binder content is preferably 1.5 parts by weight, and particularly preferably 2 parts by weight in order to improve adhesion with the porous base layer (A). In an embodiment of the present invention, both microfibers and a binder are included, and therefore in comparison to a case in which only microfibers are used, binding between the microfibers is enhanced, the strength of the heat resistant layer (B) is increased, and the adhesion of the heat resistant layer (B) to the porous base layer (A) is improved. Therefore, the secondary battery separator according to an embodiment of the present invention is particularly excellent in heat resistance (for example, shape retention in a high-temperature environment). On the other hand, in a case where the content of the binder is less than the range described above, the porous base layer (A) and the heat resistant layer (B) tend to easily peel apart, and retention of the shape of the porous base layer (A) in a high temperature environment tends to be difficult. In addition, the strength of the heat resistant layer (B) tends to decrease.

The heat resistant layer (B) is preferably porous, and the porosity thereof is, for example, preferably from 30 to 60 vol%, and particularly preferably from 35 to 55 vol%. In a case where the porosity exceeds the range described above, heat resistance (for example, shape retention in a high-temperature environment) tends to be insufficient. On the other hand, in a case where the porosity falls below the range described above, the permeability of the lithium ions is negatively affected, and electrical resistance tends to increase.

The air permeability of the heat resistant layer (B) is, for example, from 1 to 500 sec/100 mL, preferably from 1 to 400 sec/100 mL, particularly preferably from 1 to 330 sec/100 mL, and most preferably from 1 to 300 sec/100 mL. In a case where the air permeability exceeds the range described above, the permeability of the lithium ions is negatively affected, and electrical resistance tends to increase. On the other hand, in a case where the air permeability is below the range described above, heat resistance (for example, shape retention in a high-temperature environment) tends to be insufficient.

The thickness of the heat resistant layer (B) is, for example, from 0.5 to 20 μm, and from the perspective of particularly excelling in heat resistance (for example, shape retention and a shrinkage suppression effect in high temperature environments), the lower limit of the thickness thereof is preferably 1 μm, particularly preferably 2 μm, and most preferably 3 μm. In addition, from the perspective of being able to improve the packing density of the electrodes and to achieve a more compact design of the secondary battery, the upper limit is preferably 15 μm, more preferably 12 μm, particularly preferably 10 μm, most preferably 8 μm, and especially preferably 5 μm.

The heat resistant layer (B) is extremely lightweight, and the basis weight of the heat resistant layer is, for example, not more than 10 $g/m^2$, and from the perspective of contributing to a weight reduction of the battery, the basis weight of the heat resistant layer is preferably 9 $g/m^2$ or less, more preferably 7 $g/m^2$ or less, particularly preferably 6 $g/m^2$ or less, most preferably 5 $g/m^2$ or less, and especially preferably less than 2.5 $g/m^2$. In addition, the lower limit of the basis weight is, for example, 0.3 $g/m^2$, and from the perspective of excelling in shape retention, of this range, the lower limit of the heat resistant layer is preferably 0.5 $g/m^2$, more preferably 0.8 $g/m^2$, particularly preferably 1 $g/m^2$, and most preferably 1.8 $g/m^2$.

The heat resistant layer (B) can be formed, for example, by applying a heat resistant layer-forming composition

containing at least a solvent dispersion of microfibers and a binder (for example, applying the composition to at least one surface of the porous base layer (A)), and volatilizing the solvent.

The content ratio of the microfibers and the binder in the solvent dispersion is, for example, from 1 to 20 parts by weight of the binder per 10 parts by weight of microfibers.

The nonvolatile content concentration (that is, the total content of the microfibers and binder) in the heat resistant layer-forming composition can be adjusted as appropriate in accordance with the thickness of the heat resistant layer (B) to be formed, and is, for example, from 0.5 to 10 wt.%, and preferably from 1 to 5 wt.%.

The heat resistant layer-forming composition may contain other components (for example, a dispersant, a surfactant, and the like) as necessary in addition to the microfibers, the binder, and the dispersion medium. However, the proportion of the total content of the microfibers, binder, and dispersion medium accounting for the total amount of the heat resistant layer-forming composition is, for example, 50 wt.% or higher, preferably 60 wt.% or higher, particularly preferably 70 wt.% or higher, most preferably 80 wt.% or higher, and especially preferably 90 wt.% or higher. It tends to be difficult to obtain the effect of the present invention when the heat resistant layer-forming composition includes the other components in an excessive amount.

Furthermore, the use of water as a dispersion medium in the heat resistant layer-forming composition is preferable from the perspective of having a small environmental impact and excelling in safety. The heat resistant layer-forming composition may contain, as the dispersion medium, an organic solvent besides water, but the content of the organic solvent is, for example, preferably 30 wt.% or less, more preferably 10 wt.% or less, particularly preferably 5 wt.% or less, and most preferably 2 wt.% or less, of the total amount of the dispersion medium (= total amount of volatile components) included in the heat resistant layer-forming composition. In addition, the content of the organic solvent is, for example, preferably 30 wt.% or less, particularly preferably 10 wt.% or less, most preferably 5 wt.% or less, and especially preferably 2 wt.% or less, of the total amount of the heat resistant layer-forming composition.

<Microfibers>

The melting point (decomposition temperature in case of the microfiber having no melting point) of the microfibers is at least 200°C, preferably at least 250°C, and particularly preferably at least 300°C. Note that the upper limit of the melting point (decomposition temperature in case of the microfiber having no melting point) of the microfibers is, for example, 500°C.

The average thickness (or average diameter) of the microfibers is not particularly limited, but is, for example, from 0.01 to 10 μm, and from the perspectives of having superior heat resistance (for example, shape retention in a high-temperature environment), being able to form a heat resistant layer having sufficient heat resistance even at a reduced thickness, and contributing to an even thinner separator (or contributing to a smaller secondary battery), of this range of the average thickness, the upper limit is preferably 5 μm, particularly preferably 1 μm, and most preferably 0.5 μm. Moreover, the lower limit of the average thickness is preferably 0.05 μm, and particularly preferably 0.1 μm. Note that the average thickness of the microfibers is determined by capturing an electron microscope image of a sufficient number (for example, 100 or more) of the microfibers using an electron microscope (SEM, TEM), measuring the thickness (diameter) of these microfibers, and arithmetically averaging the measured thicknesses.

The average length of the microfibers is not particularly limited, but is, for example, from 0.01 to 1 mm, and from the perspectives of having more superior heat resistance (for example, shape retention in a high-temperature environment), being able to form a heat resistant layer having sufficient heat resistance even at a reduced thickness, and contributing to an even thinner separator (or contributing to a smaller secondary battery), of this range of the average length of the microfibers, the upper limit is more preferably 0.8 mm, particularly preferably 0.5 mm, and most preferably 0.4 mm. Furthermore, the lower limit of the average length is more preferably 0.03 mm, and particularly preferably 0.07 mm.

Note that the average length of the microfibers is determined by capturing an electron microscope image of a sufficient number (for example, 100 or more) of the microfibers using an electron microscope (SEM, TEM), measuring the lengths of these microfibers, and arithmetically averaging the measured lengths. In addition, the length of the microfibers should be measured while the microfibers are straightened linearly, but in reality, many of the microfibers are bent. Therefore, the projected diameter and the projected area of the microfibers are determined from the electron microscope image using an image analysis device, and the length is calculated from the following equation assuming the microfibers are cylindrical.

$$\text{Length} = (\text{Projected Area})/(\text{Projected Diameter})$$

An average aspect ratio ((average length)/(average thickness)) of the microfibers is not particularly limited, but

is, for example, from 10 to 2000, and from the perspectives of having more superior heat resistance (for example, shape retention in a high-temperature environment), being able to form a heat resistant layer having sufficient heat resistance even at a reduced thickness, and contributing to an even thinner separator (or contributing to a smaller secondary battery), of this range of the average aspect ratio of the microfibers, the upper limit is more preferably 1500, and particularly preferably 1000. Furthermore, the lower limit of the average aspect ratio is more preferably 50, particularly preferably 100, most preferably 500, and especially preferably 800.

Examples of the microfibers include cellulose fibers, aramid fibers, polyphenylene sulfide fibers, polyimide fibers, fluorine fibers, glass fibers, carbon fibers, polyparaphenylene benzoxazole fibers, polyether ether ketone fibers, and liquid crystal polymer fibers. Of these microfibers, one type can be used alone, or two or more types can be used in combination.

Of these microfibers, fibers excelling in heat resistance are preferable, and above all, fibers having a 5% weight loss temperature ($T_{d5}$) measured at a temperature increase rate of 10°C/min (in nitrogen) of 200°C or higher (for example, from 200 to 1000°C) are preferable, and fibers with a 5% weight loss temperature of 300°C or higher are more preferable, fibers with a 5% weight loss temperature of 400°C or higher are even more preferable, and fibers with a 5% weight loss temperature of 450°C or higher are particularly preferable. Note that the 5% weight loss temperature can be measured by, for example, thermogravimetry/differential thermal analysis (TG/DTA).

Among these microfibers, aramid fibers excel in heat resistance and are easily formed into microfibers, and thus are preferable. The aramid fibers are fibers formed from a polymer (namely, a wholly aromatic polyamide) having a structure in which two or more aromatic rings are bonded via an amide bond, and the wholly aromatic polyamide includes a meta type and a para type.

Examples of the wholly aromatic polyamide include polymers having a constituent unit represented by Formula (a) below.

[Chemical 3]

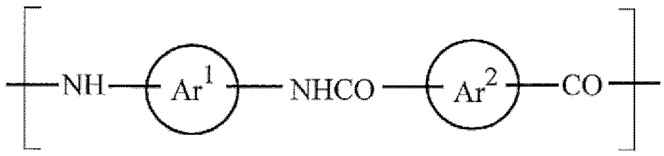

(a)

where $Ar^1$ and $Ar^2$ are the same or different, and each denotes a divalent aromatic hydrocarbon group.

The divalent aromatic hydrocarbon group in $Ar^1$ and $Ar^2$ is a group denoted by a structural formula of an aromatic ring or of two or more aromatic rings bonded via a single bond or a linking group, with two hydrogen atoms removed.

Examples of the aromatic ring include aromatic hydrocarbon rings having from 6 to 10 carbons, such as a benzene ring or a naphthalene ring. Moreover, examples of the linking group include a divalent hydrocarbon group (for example, a linear or branched alkylene group having from 1 to 18 carbons, and a divalent alicyclic hydrocarbon group having from 3 to 18 carbons), a carbonyl group (-CO-), an ether bond (-O-), an ester bond (-COO-), -NH-, $-SO_2-$, and the like. Furthermore, the aromatic ring may have various substituents [for example, a halogen atom, an alkyl group (for example, a $C_{1-4}$ alkyl group), an oxo group, a hydroxyl group, a substituted oxy group (for example, a $C_{1-4}$ alkoxy group, a $C_{1-4}$ acyloxy group, or the like), a carboxyl group, a substituted oxycarbonyl group (for example, a $C_{1-4}$ alkoxycarbonyl group), a cyano group, a nitro group, a substituted or unsubstituted amino group (for example, a mono- or di- $C_{1-4}$ alkylamino group), or a sulfo group]. In addition, an aromatic or non-aromatic heterocyclic ring may be condensed with the aromatic ring.

The aramid fibers can be produced, for example, by reacting (for example, through solution polymerization, interfacial polymerization, or the like) at least one aromatic diamine with at least one halide of an aromatic dicarboxylic acid.

Examples of the aromatic dicarboxylic acid include isophthalic acid, terephthalic acid, 1,4-naphthalene dicarboxylic acid, 2,6-naphthalene dicarboxylic acid, 4,4'-biphenyl dicarboxylic acid, 3,3'-biphenyl dicarboxylic acid, and 4,4'-diphenylether dicarboxylic acid.

Examples of the aromatic diamine include p-phenylenediamine, m-phenylenediamine, 4,4'-diaminobiphenyl, 2,4-diaminodiphenylamine, 4,4'-diaminobenzophenone, 4,4'-diaminodiphenylether, 4,4'-diaminodiphenylmethane, 4,4'-diaminodiphenylamine, 4,4'-diaminodiphenylsulfone, 2,4-diaminotoluene, 2,6-naphthalenediamine, and 1,5-naphthalenediamine.

The aramid fibers can be produced by spinning the wholly aromatic polyamide into fiber shapes by a well-known and commonly used method (for example, through processes such as spinning, washing, and drying). Furthermore, after the wholly aromatic polyamide has been spun into fibers, a crushing treatment or the like can be implemented as necessary. In the present invention, a heat resistant layer having sufficient heat resistance (for example, shape

retention in a high-temperature environment) even at a reduced thickness can be formed, and from the perspective of contributing to further thinning of the separator (or contributing to a reduction in the size of the secondary battery), it is preferable to apply a stronger mechanical shearing force using an ultra-high pressure homogenizer or the like to microfibrillate the aramid fibers.

Commercially available products such as, for example, microfibrous aramid "Tiara" (available from Daicel FineChem Ltd.) may be used as the aramid fibers.

<Binder>

In an embodiment of the present invention, the binder is a compound that exhibits an effect of imparting an appropriate level of viscosity and improving coatability when the binder is added to the heat resistant layer-forming composition, and that further exhibits an action of imparting adhesiveness to fix the microfibers to the surface of the porous base layer (A).

From the perspective of expressing heat resistance of the heat resistant layer (B), use of a binder having excellent heat resistance is not required, but is preferable. In particular, as the binder, use of a binder having a melting point (decomposition temperature in case of the binder having no melting point) that is, for example, 160°C or higher (preferably 180°C or higher, and particularly preferably 200°C or higher) is preferable. Note that the upper limit of the melting point (decomposition temperature in case of the binder having no melting point) of the binder is, for example, 400°C.

The viscosity of a 1 wt.% aqueous solution of the binder (at 25°C and 60 rotations) is, for example, preferably from 100 to 5000 mPa·s, particularly preferably from 500 to 3000 mPa·s, and most preferably from 1000 to 2000 mPa·s.

Examples of the binder include non-aqueous binders such as fluorine-based binders (for example, polyvinylidene fluoride), polyester-based binders, epoxy-based binders, acrylic-based binders, and vinyl ether-based binders, and also water-based binders. In an embodiment of the present invention, among these binders, a water-based binder is preferably used because the environmental load is small and the safety is excellent.

Examples of the water-based binder include polysaccharide derivatives (1), compounds having a constituent unit represented by Formula (2) below, and compounds having a constituent unit represented by Formula (3) below. One of these water-based binders can be used alone, or two or more types can be used in combination.

[Chemical 4]

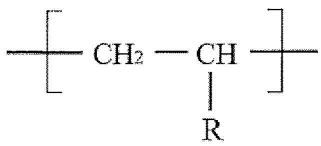

(2)

where R denotes a hydroxyl group, a carboxyl group, a phenyl group, an N-substituted or unsubstituted carbamoyl group, or a 2-oxo-1-pyrrolidinyl group.

[Chemical 5]

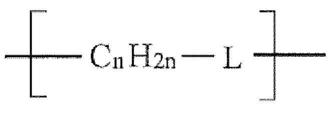

(3)

where n is an integer of 2 or higher, and L denotes an ether bond or an (-NH-) group.

Examples of the N-substituted carbamoyl group include N-$C_{1-4}$ alkyl-substituted carbamoyl groups such as $-CONHCH(CH_3)_2$ and $-CON(CH_3)_2$ groups.

The carboxyl group may form a salt with an alkali metal.

In the formula above, n is an integer of 2 or greater, and for example, is an integer from 2 to 5, and preferably from 2 to 3. Therefore, the $[C_nH_{2n}]$ group in Formula (3) is a linear or branched alkylene group having 2 or more carbons, and examples thereof include a dimethylene group, a methylmethylene group, a dimethylmethylene group, and a trimethylene group.

The compound having a constituent unit represented by Formula (2) above and the compound having a constituent unit represented by Formula (3) above may each have a constituent unit besides the constituent unit represented by Formula (2) or the constituent unit represented by Formula (3) above.

Examples of the compound having a constituent unit represented by Formula (2) include diene rubbers such as styrene-butadiene rubber (SBR), acrylonitrile-butadiene rubber (NBR), methyl methacrylate-butadiene rubber (MBR), and butadiene rubber (BR); acrylic polymers such as polyacrylic acid, sodium polyacrylate, a sodium salt of an acrylic acid/maleic acid copolymer, and a sodium salt of an acrylic acid/sulfonic acid copolymer; acrylamide polymers such as polyacrylamide, poly-N-isopropyl acrylamide, and poly-N,N-dimethylacrylamide; and polyvinylpyrrolidone.

Examples of the compound having a constituent unit represented by Formula (3) include polyalkylene glycols such as polyethylene glycol and polypropylene glycol; and polyethylene imine.

The polysaccharide derivative (1) is a compound produced by polymerizing two or more monosaccharides through glycosidic bonds. In an embodiment of the present invention, among these, a compound produced by polymerizing glucose (for example, $\alpha$-glucose or $\beta$-glucose) through glycosidic bonds, or a derivative thereof is preferable, and in particular at least one type selected from cellulose, starch, glycogen, or derivatives thereof is particularly preferable.

As the polysaccharide derivative (1), use of cellulose or a derivative thereof is particularly preferable from the perspectives of excelling in heat resistance, and being able to impart excellent adhesive force and viscosity to the heat resistant layer-forming composition through the addition of only a small amount.

Examples of the cellulose or derivatives thereof include compounds having a constituent unit represented by Formula (1-1) below.

[Chemical 6]

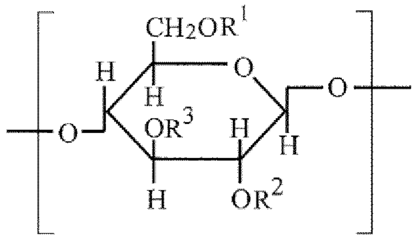

(1-1)

where $R^1$ to $R^3$ are the same or different, and denote a hydrogen atom or an alkyl group having from 1 to 5 carbons, and having a hydroxyl group or a carboxyl group. Note that the hydroxyl group and the carboxyl group may form a salt with an alkali metal.

Examples of the alkyl group having from 1 to 5 carbons include a methyl group, an ethyl group, a propyl group, an isopropyl group, a butyl group, an isobutyl group, an s-butyl group, a t-butyl group, and a pentyl group.

The hydroxyl group and carboxyl group may form a salt with an alkali metal, and for example, an -OH group may form a salt with sodium to form a

- ONa group, and a -COOH group may form a salt with sodium to form a
- COONa group.

Specific examples of derivatives of the cellulose include hydroxy ethyl cellulose, hydroxypropyl cellulose, carboxymethyl cellulose, and alkali metal salts thereof (for example, sodium carboxymethyl cellulose).

As described above, the binder according to an embodiment of the present invention is preferably a water-based binder, and of such binders, a polysaccharide derivative (1) is preferable from the perspectives of excelling in a viscosity imparting effect, being able to improve the coatability of the heat resistant layer-forming composition when added in small amounts, being able to exhibit an action of fixing the microfibers to the surface of the porous base layer (A), and excelling in heat resistance.

[Method for Producing Secondary Battery Separator]

The secondary battery separator according to an embodiment of the present invention can be produced, for example, by coating a surface of the porous base layer (A) with a solvent dispersion of microfibers and a binder (for example, the heat resistant layer-forming composition described above), and then volatilizing the solvent.

In the present invention, using a water-based binder as the binder and using water as the solvent is preferable from the perspectives of minimizing the environmental impact and excelling in safety.

The method for applying the heat resistant layer-forming composition described above is not particularly limited, and the composition can be applied through, for example, a printing method or a coating method. Specific examples

include methods such as screen printing methods, mask printing methods, offset printing methods, inkjet printing methods, flexographic printing methods, gravure printing methods, stamping, dispensing, squeegee printing methods, silk screen printing methods, spraying and brushing. Furthermore, the composition may be applied using a film applicator, a bar coater, a die coater, a comma coater, a gravure coater, or the like.

The heat resistant layer-forming composition described above can be applied to one or both sides of the porous base layer (A). In an embodiment of the present invention, from the perspectives of being able to reduce the total thickness of the secondary battery separator, being able to increase the packing density of the battery, and contributing to a reduction in the size of the secondary battery, of the one or both sides, it is preferable that the composition be applied to one side of the porous base layer (A).

The method for volatilizing the solvent is not particularly limited, but examples include methods such as heating, reducing the pressure, and blowing. The heating temperature, the heating time, the degree of reduced pressure, the time of reduced pressure, the blowing rate, the blowing speed, the blowing temperature, the type and dryness of gas to be blown, the area to be blown, the direction of blowing, and the like can be optionally selected.

In addition, in an embodiment of the present invention, performing pressing after the solvent has been volatilized can further reduce the total thickness of the secondary battery separator and increase the packing density of the battery. This contributes to a reduction in the size of the secondary battery, and is therefore preferable. The pressure at the time of performing pressing is, for example, 0.1 MPa or greater, preferably from 1 to 100 MPa, particularly preferably from 5 to 50 MPa, and most preferably from 10 to 30 MPa. The pressing time is around, for example, from 1 second to 100 minutes.

The pressing process is preferably performed until, for example, the thickness of the heat resistant layer (B) becomes 15 μm or less (preferably 12 μm or less, more preferably 10 μm or less, particularly preferably 5 μm or less, most preferably 4 μm or less, and especially preferably 3 μm or less).

The pressing can be performed using, for example, a commonly known apparatus such as a roll press, a hand press, an air press, or a hydraulic press.

[Secondary Battery]

The secondary battery includes, in an external body, power generation elements including a cathode having a cathode active material layer disposed on a cathode current collector, an anode having an anode active material layer disposed on an anode current collector, a separator, and an electrolytic solution. The secondary battery according to an embodiment of the present invention is characterized in that the separator is the secondary battery separator described above.

The secondary battery according to an embodiment of the present invention may be a wound battery in which a cathode, an anode, and a separator are stacked and wound, and then enclosed in a container such as a can together with an electrolytic solution, or may be a stacked battery in which a cathode, an anode, and a separator are stacked to form a sheet-shaped product, which is then enclosed in a relatively flexible external body along with an electrolytic solution.

The secondary battery according to an embodiment of the present invention is provided with the secondary battery separator described above, which excels in heat resistance (for example, shape retention in a high-temperature environment), and therefore short circuiting or thermal runaway of the electrodes can be prevented, and the secondary battery is safe. In addition, the secondary battery separator is lightweight. As a result, the secondary battery according to an embodiment of the present invention is lightweight. Therefore, IT devices such as smartphones and notebook computers, hybrid vehicles, electric vehicles, and the like which are provided with the secondary battery according to an embodiment of the present invention can be reduced in weight while maintaining a high level of safety. For example, the weight of an electric vehicle that uses the secondary battery according to an embodiment of the present invention can be significantly reduced, and thus fuel economy can be dramatically improved.

## Examples

Hereinafter, the present invention will be described more specifically with reference to examples, but the present invention is not limited by these examples.

### Example 1

1.6 parts by weight of sodium carboxymethyl cellulose (CMC, viscosity of 1 wt.% aqueous solution (at 25°C and 60 rotations): 1724 mPa·s, decomposition temperature: 290°C, reduction ratio with drying: 8.2%, available from Daicel FineChem Ltd., product number: 2200) was added to 100 parts by weight of water, the mixture was stirred for 30 minutes at 2000 rpm using a planetary centrifugal mixer (available from Thinky Corporation, product name: Awatori Rentaro, model number: ARE-310), and a CMC aqueous solution was thereby prepared.

In addition, 18 parts by weight of water was added to 6 parts by weight of aramid fibers (average thickness:

0.56 μm, average length: 0.43 mm, average aspect ratio: 768, decomposition temperature: 400°C or higher, 5% weight loss temperature ($T_{d5}$) measured at a temperature increase rate of 10°C/min (in nitrogen): 545°C, solid content: 20.7%, available from Daicel FineChem Ltd., trade name: Tiara, product number: KY400S), and the mixture was stirred for 5 minutes at 2000 rpm using a planetary centrifugal mixer. Next, 100 parts by weight of the previously prepared CMC aqueous solution was weighed out and added to the aramid fiber mixture, and then stirred for 5 minutes at 2000 rpm using the planetary centrifugal mixer, and a heat resistant layer-forming composition (1) (aramid fiber content: 1.0 wt.%, CMC content: 1.2 wt.%) was obtained.

The prepared heat resistant layer-forming composition (1) was applied through an applicator onto a polypropylene microporous film (Selion P2010, available from CS Tech Co., Ltd., average pore diameter: 0.03 μm, thickness: 20 μm) as a porous base material at a rate of 10 mm/sec and a coating thickness of 250 μm using an automated coating apparatus (available from Tester Sangyo Co., Ltd., model number: PI-1210). Next, the coated film was dried for 1 hour at room temperature, and then dried for 30 minutes in a high temperature tank at 60°C, and thereby a separator (1) (thickness of the heat resistant layer: 10 μm) formed from a heat resistant layer/PP laminate was produced with the heat resistant layer being formed from a non-woven fabric containing aramid fibers and CMC.

Example 2

A separator (2) (thickness of the heat resistant layer: 7 μm) formed from a heat resistant layer/PP laminate with the heat resistant layer being made from a non-woven fabric containing aramid fibers and CMC was produced in the same manner as in Example 1 with the exception that the coating thickness of the heat resistant layer-forming composition (1) was changed.

Example 3

A separator (3) (thickness of the heat resistant layer: 6 μm) formed from a heat resistant layer/PP laminate with the heat resistant layer being made from a non-woven fabric containing aramid fibers and CMC was produced in the same manner as in Example 1 with the exception that the coating thickness of the heat resistant layer-forming composition (1) was changed.

Example 4

0.3 parts by weight of aramid fibers (average thickness: 0.56 μm, average length: 0.43 mm, average aspect ratio: 768, decomposition temperature: 400°C or higher, 5% weight loss temperature ($T_{d5}$) measured at a temperature increase rate of 10°C/min (in nitrogen): 545°C, solid content: 20.7%, available from Daicel FineChem Ltd., trade name: Tiara, product number: KY400S) was added to 100 parts by weight of water, and the mixture was stirred using a planetary centrifugal mixer, and thereby an aramid fiber aqueous dispersion was prepared.

The prepared aramid fiber aqueous dispersion was subjected to a crushing treatment at a treatment pressure of 50 MPa using a high pressure homogenizer (PANDA2K (NS1001L), available from Niro Soavi Laboratory) equipped with a crushing-type homo valve seat. The crushing treatment was performed ten times and the prepared aramid fiber aqueous dispersion was finely crushed. Thus, the fine aramid fiber aqueous dispersion (aramid fiber average thickness: 0.40 μm, average length: 0.34 mm, average aspect ratio: 850, decomposition temperature: 400°C or higher) was prepared.

The water of the fine aramid fiber aqueous dispersion was removed by filtering, and a fine aramid fiber aqueous dispersion with a solid content of 8% was obtained. Next, 9 parts by weight of water was added to 15 parts by weight of the fine aramid fiber aqueous dispersion, and the mixture was stirred for 5 minutes at 2000 rpm using a planetary centrifugal mixer.

Here, 100 parts by weight of a CMC aqueous solution produced in the same manner as in Example 1 was weighed out and added to the mixture above, and the mixture was stirred for 5 minutes at 2000 rpm using a planetary centrifugal mixer, and thereby a heat resistant layer-forming composition (2) (fine aramid fiber content: 1.0 wt.%, CMC content: 1.2 wt.%) was produced.

A separator (4) (thickness of the heat resistant layer: 5 μm) formed from a heat resistant layer/PP laminate with the heat resistant layer being made from a non-woven fabric containing fine aramid fibers and CMC was produced in the same manner as in Example 1 with the exception that the heat resistant layer-forming composition (2) was used in place of the heat resistant layer-forming composition (1), and the coating thickness was changed.

Example 5

A separator (5) (thickness of the heat resistant layer: 3.5 μm) formed from a heat resistant layer/PP laminate

with the heat resistant layer being made from a non-woven fabric containing fine aramid fibers and CMC was produced in the same manner as in Example 4 with the exception that the coating thickness of the heat resistant layer-forming composition (2) was changed.

Example 6

A separator (6) (thickness of the heat resistant layer: 5.0 μm) formed from a heat resistant layer/PP laminate with the heat resistant layer being made from a non-woven fabric containing fine aramid fibers and CMC was produced in the same manner as in Example 4 with the exception that as the porous base material, a polypropylene microporous film (Selion P2010, available from CS Tech Co., Ltd., average pore diameter: 0.03 μm, thickness: 20 μm), which had been subjected to corona discharge treatment, was used.

Example 7

A press (Mini Test Press-10, available Toyo Seiki Seisaku-sho, Ltd.) was used to apply a pressure of 15 MPa for one minute to the separator (6) produced by the same method as that of Example 6, and a separator (7) (thickness of the heat resistant layer: 3.0 μm) formed from a heat resistant layer/PP laminate with the heat resistant layer being made from a non-woven fabric containing fine aramid fibers and CMC was produced.

Comparative Example 1

100 parts by weight of a CMC aqueous solution prepared in the same manner as in Example 1 was weighed out, 65 parts by weight of alumina (average particle diameter: 0.5 μm) was added thereto, and the mixture was stirred for 5 minutes at 2000 rpm using a planetary centrifugal mixer, and thereby a heat resistant layer-forming composition (3) (alumina content: 40 wt.%, CMC content: 0.90 wt.%) was prepared.

A separator (8) (thickness of the heat resistant layer: 5 μm) formed from a heat resistant layer/PP laminate was obtained in the same manner as in Example 1 with the exception that the heat resistant layer-forming composition (3) was used in place of the heat resistant layer-forming composition (1).

Comparative Example 2

As the porous base material, a polypropylene microporous film (Selion P2010, available from CS Tech Co., Ltd., average pore diameter: 0.03 μm, thickness: 20 μm) was used alone as a separator (9) (without forming a heat resistant layer).

The air permeability and heat resistance of the separators produced in the Examples and Comparative Examples were measured by the following methods.

(Air Permeability Test)

The air permeability was measured in accordance with JIS P8117 using a Gurley type Densometer type B available from Tester Sangyo Co., Ltd. The number of seconds was measured using a digital autocounter. Smaller values of air permeability (Gurley value) indicate a higher permeability of air.

(Heat Resistance Test (1))

The separator was shaped into a roughly square shape of about 3 cm x 3 cm, and the lengths in the MD (direction of flow of the porous base material) and TD (direction orthogonal to the MD direction) were measured. The separator was then electrostatically adhered onto a Teflon (trade name) plate. Next, the Teflon (trade name) plate was covered with aluminum foil such that the separator did not fly off when subjected to airflow. The Teflon (trade name) plate was then inserted into a thermostatic chamber adjusted to a temperature of 150°C and left for approximately 30 minutes. Subsequently, the Teflon (trade name) plate was removed, and the separator was allowed to cool to room temperature. The lengths in the MD and TD of the separator removed from the Teflon (trade name) plate were then measured, and the MD shrinkage rate (%) and the TD shrinkage rate (%) were calculated using the following equations.

$$\text{MD Shrinkage Rate (\%)} = (1 - (\text{MD length after heating})/(\text{MD length before heating})) \times 100$$

$$\text{TD Shrinkage Rate (\%)} = (1 - (\text{TD length after heating})/(\text{TD length before heating})) \times 100$$

(Heat Resistance Test (2))

The separator was shaped into a roughly square shape of approximately 3 cm x 3 cm, and then placed on a hot plate, and the four corners were fixed with a polyimide tape. The separator was then heated at 320°C for 15 minutes using the hot plate. The shrinkage rate (%) of the separator after heating was calculated from the following equation, and the shape retention was evaluated based on the following criteria.

$$\text{Shrinkage Rate (\%)} = (1 - (\text{Separator area after heating})/(\text{separator area before heating})) \times 100$$

Heat Resistant Evaluation Criteria

Excellent heat resistance (excellent): Shrinkage rate is not greater than 15%.
Good heat resistance (good): Shrinkage rate exceeds 15% but is not greater than 20%.
Marginally good heat resistance (marginal): Shrinkage rate exceeds 20% but is not greater than 25%.
Poor heat resistance (poor): Shrinkage rate exceeds 25%.

The results are summarized and shown in the table below.

[Table 1]

| | Heat Resistance Layer | | | | Separator | | | | |
|---|---|---|---|---|---|---|---|---|---|
| | | | | | 150°C | | 320°C | Air Permeability (sec/100 mL) | Thickness (μm) |
| | Thickness (μm) | Basis Weight (g/m$^2$) | Aramid Fiber Size | Air Permeability (sec/100 mL) | MD Shrinkage Rate (%) | TD Shrinkage Rate (%) | Shape Retention | | |
| Example 1 | 10 | 4 | D = 0.56 μm, L = 0.43 mm, L/D = 768 | < 419 | 1 | 0.5 | Excellent | 419 | 30 |
| Example 2 | 7 | 2.5 | D = 0.56 μm, L = 0.43 mm, L/D = 768 | <341 | 4 | 0.5 | Good | 341 | 27 |
| Example 3 | 6 | 2.5 | D = 0.56 μm, L = 0.43 mm, L/D = 768 | < 313 | 5 | 0.5 | Marginal | 313 | 26 |
| Example 4 | 5 | 2 | D = 0.40 μm, L = 0.34 mm, L/D = 850 | < 330 | 6 | 0.5 | Excellent | 330 | 25 |
| Example 5 | 3.5 | 1.5 | D = 0.40 μm, L = 0.34 mm, L/D = 850 | < 275 | 10 | 0.5 | Good | 275 | 23.5 |
| Example 6 | 5 | 2 | D = 0.40 μm, L = 0.34 mm, L/D = 850 | < 271 | 1 | 0.5 | Excellent | 271 | 25 |
| Example 7 | 3 | 2 | D = 0.40 μm, L = 0.34 mm, L/D = 850 | < 306 | 1 | 0.5 | Excellent | 306 | 23 |
| Comparative Example 1 | 5 | 6.5 | - | < 285 | - | - | Good | 285 | 25 |
| Comparative Example 2 | - | - | - | - | 27 | 2 | Poor | 231 | 20 |

To summarize the above, configurations and variations according to embodiments of the present invention will be described below.

[1] A secondary battery separator including: a porous base layer (A); and a heat resistant layer (B) made from a non-woven fabric containing a binder and microfibers having a melting point (decomposition temperature in case of the microfiber having no melting point) of 200°C or higher.

[2] The secondary battery separator according to [1], wherein a size of each void in the porous base layer (A) is from 0.01 to 1 $\mu$m.

[3] The secondary battery separator according to [1] or [2], wherein the porosity of the porous base layer (A) is from 20 to 70 vol.%.

[4] The secondary battery separator according to any one of [1] to [3], wherein air permeability of the porous base layer (A) is from 100 to 600 sec/100 mL.

[5] The secondary battery separator according to any one of [1] to [4], wherein the porous base layer (A) is a porous base layer made from a thermoplastic polymer.

[6] The secondary battery separator according to any one of [1] to [4], wherein the porous base layer (A) is a porous base layer formed from a thermoplastic polymer having a softening temperature of from 140 to 150°C.

[7] The secondary battery separator according to any one of [1] to [4], wherein the porous base layer (A) is a polyolefin-based porous base layer.

[8] The secondary battery separator according to any one of [1] to [4], wherein the porous base layer (A) is a polyolefin-based porous base layer having a polar group imparted on a surface thereof.

[9] The secondary battery separator according to any one of [1] to [8], wherein a 5% weight loss temperature of the microfibers is 200°C or higher.

[10] The secondary battery separator according to any one of [1] to [9], wherein the microfibers are aramid fibers.

[11] The secondary battery separator according to any one of [1] to [10], wherein an average thickness of the microfibers is from 0.01 to 10 $\mu$m, and an average length is from 0.01 to 1 mm.

[12] The secondary battery separator according to any one of [1] to [11], wherein an aspect ratio ((average length)/(average thickness)) of the microfibers is from 10 to 2000.

[13] The secondary battery separator according to any one of [1] to [12], wherein the binder is a water-based binder.

[14] The secondary battery separator according to any one of [1] to [13], wherein the binder has a melting point (decomposition temperature in case of the binder having no melting point) of 160°C or higher.

[15] The secondary battery separator according to any one of [1] to [14], wherein a viscosity at 25°C and 60 rotations of a 1 wt.% aqueous solution of the binder is from 100 to 5000 mPa·s.

[16] The secondary battery separator according to any one of [1] to [15], wherein the binder is at least one type selected from a polysaccharide derivative (1), a compound having a constituent unit represented by formula (2), and a compound having a constituent unit represented by formula (3).

[17] The secondary battery separator according to any one of [1] to [16], wherein the binder is at least one selected from cellulose, starch, glycogen, and derivatives thereof.

[18] The secondary battery separator according to any one of [1] to [17], wherein a content of the binder is from 1 to 20 parts by weight per 10 parts by weight of the microfibers.

[19] The secondary battery separator according to any one of [1] to [18], wherein a thickness of the heat resistant

layer (B) is from 0.5 to 20 μm, and a total thickness of the secondary battery separator is from 10 to 50 μm.

[20] The secondary battery separator according to any one of [1] to [19], wherein a basis weight of the heat resistant layer (b) is from 0.3 to 10 g/$m^2$.

[21] The secondary battery separator according to any one of [1] to [20], wherein a porosity of the heat resistant layer (B) is from 30 to 60 vol.%.

[22] The secondary battery separator according to any one of [1] to [21], wherein an air permeability of the heat resistant layer (B) is from 1 to 500 sec/100 mL.

[23] The secondary battery separator according to any one of [1] to [22], wherein a shrinkage rate at 150°C is 15% or less.

[24] The secondary battery separator according to any one of [1] to [23], wherein a shrinkage rate at 320°C is 25% or less.

[25] The secondary battery separator according to any one of [1] to [22], wherein a shrinkage rate at 320°C is 25% or less, and a shrinkage rate at 150°C is 15% or less.

[26] The secondary battery separator according to any one of [1] to [25], wherein an air permeability is from 100 to 800 sec/100 mL.

[27] A method for producing a secondary battery separator, wherein a secondary battery separator described in any one of [1] to [26] is produced by coating a surface of a porous base layer (A) with a solvent dispersion of microfibers and a binder, and volatilizing the solvent.

[28] The method for producing a secondary battery separator according to [27], wherein pressing is performed after the solvent is volatilized.

[29] A secondary battery provided with the secondary battery separator described in any one of [1] to [26].

Industrial Applicability

The secondary battery separator of the present invention is lightweight and excels in heat resistance, and can be suitably used in hybrid vehicles, electric vehicles, and the like. The weight of an electric vehicle that uses a secondary battery provided with the secondary battery separator of the present invention can be significantly reduced, and thereby fuel economy can be dramatically improved.

## Claims

**1.** A secondary battery separator comprising:

a porous base layer (A); and
a heat resistant layer (B) comprising a non-woven fabric containing a binder and microfibers having a melting point (or a decomposition temperature in case of the microfibers having no melting point) of 200°C or higher.

**2.** The secondary battery separator according to claim 1, wherein a 5% weight loss temperature of the microfibers is 200°C or higher.

**3.** The secondary battery separator according to claim 1 or 2, wherein the microfibers are aramid fibers.

**4.** The secondary battery separator according to any one of claims 1 to 3, wherein the binder is a water-based binder.

**5.** The secondary battery separator according to any one of claims 1 to 4, wherein the binder is at least one type selected from: a polysaccharide derivative (1); a compound having a constituent unit represented by Formula (2),

[Chemical 1]

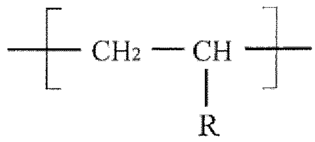

(2)

where R denotes a hydroxyl group, a carboxyl group, a phenyl group, an N-substituted or unsubstituted carbamoyl group, or a 2-oxo-1-pyrrolidinyl group; and a compound having a constituent unit represented by Formula (3),

[Chemical 2]

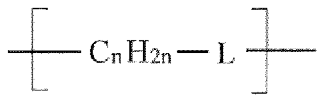

(3)

where n is an integer of 2 or higher, and L denotes an ether bond or a (-NH-) group.

6. The secondary battery separator according to any one of claims 1 to 4, wherein the binder is at least one type selected from cellulose, starch, glycogen, and derivatives thereof.

7. The secondary battery separator according to any one of claims 1 to 6, wherein an average thickness of the microfibers is from 0.01 to 10 μm, and an average length is from 0.01 to 1 mm.

8. The secondary battery separator according to any one of claims 1 to 7, wherein a thickness of the heat resistant layer (B) is from 0.5 to 20 μm, and a total thickness of the secondary battery separator is from 10 to 50 μm.

9. The secondary battery separator according to any one of claims 1 to 8, wherein a basis weight of the heat resistant layer (B) is 10 $g/m^2$ or less.

10. A method for producing a secondary battery separator described in any one of claims 1 to 9, the method comprising coating a surface of a porous base layer (A) with a solvent dispersion of microfibers and a binder, and volatilizing the solvent to produce the secondary battery separator.

11. The method for producing a secondary battery separator according to claim 10, wherein the method includes performing pressing after the volatilizing the solvent.

12. A secondary battery comprising the secondary battery separator described in any one of claims 1 to 9.

**INTERNATIONAL SEARCH REPORT**

International application No. PCT/JP2019/006727

A. CLASSIFICATION OF SUBJECT MATTER
Int.Cl. H01M2/16(2006.01)i

According to International Patent Classification (IPC) or to both national classification and IPC

B. FIELDS SEARCHED

Minimum documentation searched (classification system followed by classification symbols)
Int.Cl. H01M2/16

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2011/033975 A1 (KURARAY CO., LTD.) 24 March 2011, claims, examples & US 2012/0164514 A1, claims, examples & EP 2479820 A1 & CN 102498592 A & KR 10-2012-0080596 A | 1-5, 8-9,<br>6 |
| X | JP 2005-159283 A (JAPAN VILENE COMPANY, LTD.) 16 June 2005, claims, paragraphs [0040], [0074], examples (Family: none) | 1-3, 7-9 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 May 2019 (16.05.2019) | 28 May 2019 (28.05.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/006727

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2017/169848 A1 (TOKUSHU TOKAI PAPER CO., LTD.) 05 October 2017, paragraph [0075] & US 2019/0048528 A1, paragraph [0078] & KR 10-2018-0131541 A | 6 |
| A | JP 2009-272153 A (HITACHI MAXELL, LTD.) 19 November 2009, claims, paragraph [0073] (Family: none) | 1-12 |
| A | JP 2012-232518 A (DAICEL CORPORATION) 29 November 2012, claims, paragraph [0076] (Family: none) | 1-12 |
| A | JP 2016-212984 A (TOYOTA MOTOR CORP.) 15 December 2016, claims & US 2016/0322621 A1, claims & KR 10-2016-0129743 A & CN 106099012 A | 1-12 |
| P, X | JP 2018-206671 A (MITSUBISHI PAPER MILLS LIMITED) 27 December 2018, claims, examples (Family: none) | 1-4, 7-9, 12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018032520 A
- JP 2018134374 A
- WO 2012005139 A